# EUROPÄISCHE PATENTANMELDUNG

(11) **EP 2 896 976 A1**
(43) Veröffentlichungstag der Anmeldung: **22.07.2015**
(21) Anmeldenummer: 15151479.1
(22) Anmeldetag: 16.01.2015
(51) Int. Cl.: G02B 5/02

(54) **Optisches System zur Erzeugung einer spezifischen Lichtverteilung**

(30) Priorität: 17.01.2014 DE 102014100520
(71) Anmelder: Karl Jungbecker GmbH & Co. Elektro-Feinmechanischer Betrieb, 57462 Olpe (DE)
(72) Erfinder: Dr. Heße, Andreas, 57482 Wenden-Gerlingen (DE)
(74) Vertreter: Lippert, Stachow & Partner

(57) **Zusammenfassung**

Die Erfindung betrifft ein optisches System (1) zur Erzeugung einer spezifischen Lichtverteilung, insbesondere einer asymmetrischen Lichtverteilung zur Blendungsbegrenzung, umfassend eine optisch wirksame erste Platte (10, 210, 310), deren eine Hauptfläche (11, 12, 211, 212) als Lichteintrittsfläche und deren andere Hauptfläche (11, 12, 211, 212) als Lichtaustrittsfläche ausgebildet ist, wobei sich in Lichtrichtung vor der Lichteintrittsfläche der ersten Platte (10, 210, 310) eine flächige Diffusorstruktur (20, 220, 320) in Form einer Tafel oder einer Folie erstreckt. Die flächige Diffusorstruktur (20, 220, 320) ist im Bereich von vorgegebenen Befestigungsabschnitten mechanisch mit der ersten Platte (10, 210, 310) verbunden und über den größten Teil ihrer Flächenerstreckung zur ersten Platte (10, 210, 310) beabstandet angeordnet.

## Beschreibung

Die Erfindung betrifft ein optisches System zur Erzeugung spezifischer Lichtverteilungen, insbesondere einer asymmetrischen Lichtverteilung zur Objektbeleuchtung oder zur Blendungsbegrenzung, umfassend eine optisch wirksame erste Platte, deren eine Hauptfläche als Lichteintrittsfläche und deren andere Hauptfläche als Lichtaustrittsfläche ausgebildet ist, wobei sich in Lichtrichtung vor oder hinter der Lichteintrittsfläche der ersten Platte eine flächige Diffusorstruktur in Form einer Tafel oder einer Folie erstreckt.

Derartige optische Systeme werden häufig in der Display- und Leuchtentechnik eingesetzt, um beispielsweise das Licht von Punktlichtquellen zu homogenisieren und je nach spezifischer Anwendung eine vorgegebenen Lichtverteilung wie Blendungsbegrenzung, eine Batwing-Lichtverteilung oder eine andere asymmetrische oder symmetrische Winkelverteilungen zu erzeugen. Zweckmäßigerweise umfassen die herkömmlichen optischen Systeme hierzu zumindest zwei übereinander angeordnete optisch wirksame flächenartige Strukturen wie Platten, Tafeln und/oder Folien, die jeweils für eine vorgegebene Änderung der Lichtverteilung ausgebildet sind. Häufig werden die optisch wirksam flächenartigen Strukturen im Display- und Leuchtenbereich mittels zugeordneten Haltestrukturen in einer vorgegebenen Lage innerhalb der Leuchte oder des Displays gehalten. Je nach Dicke und Anzahl der übereinander angeordneten flächenartigen Strukturen ist ein hoher, oftmals auch manueller Aufwand zur Einbringung und Fixierung des optischen Systems innerhalb des Displays bzw. der Leuchte notwendig.

Der Erfindung liegt auch die Aufgabe zugrunde, unter Beibehaltung und sogar Erweiterung der hohen optischen Funktionalität herkömmlicher optischer Systeme, deren Verwendbarkeit zu vereinfachen und den Kostenaufwand für den Einsatz der optischen Systeme innerhalb von Displays und/oder Leuchten zu verringern.

Diese Aufgabe wird erfindungsgemäß schon durch ein optisches System zur Erzeugung einer spezifischen Lichtverteilung mit den Merkmalen von Anspruch 1 gelöst. Das erfindungsgemäße System zeichnet sich dadurch aus, dass die flächige Diffusorstruktur im Bereich von vorgegebenen Befestigungsabschnitten mechanisch mit der ersten Platte verbunden und über den größten Teil ihrer Flächenerstreckung zur ersten Platte beabstandet angeordnet ist. Durch die beschriebene konstruktive Maßnahme des erfindungsgemäßen optischen Systems wird zum Einen erreicht, dass das System als einzelnes Bauelement in Displays bzw. Leuchten einsetzbar ist, sodass sich der hierzu notwendige, mechanischen Montage- und Fixieraufwand verringert. Darüber hinaus wird durch die angegebene konstruktive Maßnahme erreicht, dass über den größten Teil der Überlappung von Diffusorstruktur und erster Platte die optischen Wirkungen der beiden flächigen Strukturen zur Lichtlenkung bzw. -verteilung ungestört von der benachbarten Struktur ist.

Zweckmäßigerweise können sowohl die Diffusorstruktur als auch die erste Platte aus einem beliebigen optisch wirksamen und zweckmäßigerweise einfach zu verarbeitendem Material, wie einem optischen Kunststoff, beispielsweise PMMA, PVC oder Polycarbonat hergestellt sein bzw. ein solches Material umfassen.

Vorteilhafte Weiterbildungen der Erfindung sind in der nachfolgenden allgemeinen Beschreibung, der speziellen Beschreibung sowie in den Unteransprüchen angegeben.

Vorteilhafterweise kann zwischen der Diffusorstruktur und der ersten Platte ein Fluidspalt, insbesondere ein Luftspalt existieren, um vorgegebene und definierte Brechungsindexübergänge zwischen den optisch wirksamen Strukturen und damit eine vorgegebene genaue Lichtlenkung bereitzustellen. Um diese vorgegebenen optischen Eigenschaften unabhängig von äußeren Bedingungen und über einen langen Zeitraum bereitzustellen, kann zweckmäßigerweise vorgesehen sein, dass das Fluid insbesondere luft-, staub-, feuchtigkeits- und/oder gasdicht zwischen der ersten Platte und der Diffusorstruktur eingeschlossen ist. Damit kann beispielsweise das Eindringen von Teilchen oder Stoffen in den Zwischenraum zwischen Diffusorstruktur und erster Platte vermieden werden, welche die Lichtlenkung ansonsten stören würden oder als unerwünschte Unregelmäßigkeit optisch wahrnehmbar wären.

Eine besonders vorteilhafte Gestaltung kann dadurch erreicht werden, wenn die Diffusorstruktur und die erste Platte allein nur in den Befestigungsabschnitten, an welchen beide Bauteile miteinander verbunden sind, unbeabstandet sind. Eine besonders zweckmäßige und vorteilhafte Ausführungsform ergibt sich, wenn die Diffusorstruktur allein an ihren Begrenzungskanten mit der ersten Platte verbunden ist, so dass über den gesamten Überlappungsbereich von Diffusorstruktur und erster Platte eine Beabstandung vorliegt. Insofern kann bei einem solchen System über die gesamte flächige Erstreckung von Diffusorstruktur und/oder erster Platte die optimalen optischen Eigenschaften beider Bauteile bereitgestellt werden.

Der Abstand zwischen Diffusorstruktur und erster Platte sollte, um die Wirkung der Entkopplung zwischen der Lichtlenkungen der individuellen Platten sicherzustellen, sicher größer sein als ein µm. In besonderen Ausführungsformen kann jedoch vorgesehen sein, einen größeren Abstand wie beispielsweise 50 µm oder 100 µm einzustellen.

Die Dicke der Folie, häufig der Diffusorstruktur, kann zweckmäßigerweise an die jeweilige gewünschte optische Wirkung als auch an mechanische Vorgaben, bedingt durch den jeweiligen Einsatz in der Display- bzw. Leuchtentechnik, angepasst sein. In der Regel kann die flächige Diffusorstruktur vergleichsweise dünn, mit einer Dicke < 1 mm, insbesondere < 350 µm oder noch dünner ausgebildet sein. Die erste Platte kann in der Regel dicker als die Diffusorstruktur ausgeführt sein, beispielsweise mit einer Dicke zwischen 1 mm bis 20 mm. Sowohl die erste Platte als auch die Diffusorstruktur kann formstabil ausgebildet sein. Ferner kann die Diffusorstruktur bei bestimmten Anwendungen film- bzw. folienartig ausgebildet sein, sodass diese nicht in allen Ausführungsformen formstabil sein muss. Der Ausdruck formstabil bezeichnet dabei die Eigenschaft eines Gegenstandes, eine vorgegebene Flächen- bzw. Körperform ohne äußere Krafteinwirkung beizubehalten, was bei einer sehr dünnen Folie häufig nicht der Fall ist.

Zur Herstellung einer mechanischen Verbindung zwischen erster Platte und flächiger Diffusorstruktur sind unterschiedliche Gestaltungen möglich, welche auch spezifisch auf das jeweilige Material der Platte bzw. der Diffusorstruktur auswählbar sind. Wenn die Verbindung im Bereich der Begrenzungskanten der Diffusorstruktur und/oder der ersten Platte vorgesehen ist, kann eine Mehrzahl von Formschlüssen, insbesondere durch Verhaken und Verkrallen von dem Material der Platte und der Diffusorstruktur vorgesehen sein. Andererseits ist es jedoch auch möglich, diese Verbindung, insbesondere bei einer mechanischen Kopplung der beiden Teile im Bereich ihrer Begrenzungskanten mittels eines Stoffschlusses zu realisieren, beispielsweise durch Verschweißen oder Verkleben. Dabei sollte darauf geachtet werden, dass in jedem Fall über den größten Teil der Flächenerstreckung der Diffusorstruktur, idealerweise über die gesamte Flächenerstreckung, die flächige Diffusorstruktur und die erste Platte beabstandet zueinander angeordnet sind.

Das erfindungsgemäße optische System ist besonders einfach herstellbar, indem die mechanische Verbindung zwischen erster Platte und Diffusorstruktur durch Laser- oder Ultraschall-Zuschneiden einer Stapelanordnung der entsprechenden Halbzeuge der ersten Platte und der Diffusorstruktur hergestellt wird. Beispielsweise kann auf die beschriebene Weise ein optisches System erzeugt werden, bei welchem sowohl die erste Platte und die Diffusorstruktur mit vorgegebenen Abmessungen ausgeschnitten und gleichzeitig die Verbindung zwischen beiden Bauteilen realisiert wird, insbesondere durch Herstellen eines Stoffschlusses an ihren Begrenzungskanten.

Es kann ferner vorgesehen sein, dass die flächige Diffusorstruktur eine leichte Wölbung aufweist, so dass sich zwischen der Diffusorstruktur und der ersten Platte ein Luftspalt bildet, um die gewünschte geometrische, beabstandete Anordnung von Diffusorstruktur zur ersten Platte zu realisieren. Es versteht, dass diese leichte Wölbung oder Krümmung so gering sein kann, dass sie mit dem bloßem Auge nicht sichtbar ist, um zumindest über den größten Teil der Flächenerstreckung der Diffusorstruktur zur ersten Platte einen Luftspalt auszubilden. Besonders zweckmäßig kann es dabei sein, wenn diese leichte Wölbung an der flächigen Diffusorstruktur kalottenartig ausgebildet ist und die Krümmung der Diffusorstruktur in Richtung zur ersten Platte verläuft, so dass die flächige Diffusorstruktur allein an ihren Begrenzungskanten an der ersten Platte anliegt.

In einer weiteren Ausführungsform kann auch vorgesehen sein, dass zur Vermeidung einer vollflächigen Anlage von erster Platte und flächiger Diffusorstruktur Abstandshalter vorgesehen sind. Diese Abstandshalter können zweckmäßigerweise an einer Oberfläche der ersten Platte und/oder der Diffusorstruktur integral angeformt sein, so dass beide Teile im Bereich der angeformten Abstandshalter aneinander liegen und ansonsten zueinander beabstandet sind. Diese Abstandshalter können beispielsweise in Form von beabstandeten und parallel zueinander verlaufenden Stegen an einer Oberfläche der ersten Platte und/oder der Diffusorstruktur oder auch in Form von beabstandeten punktförmigen Erhebungen ausgebildet sein. Die mechanische Verbindung zwischen erster Platte und der flächigen Diffusorstruktur kann beim Vorsehen dieser Abstandshalter im Bereich von jeweiligen Anlageflächen der Abstandshalter realisiert sein. Soweit eine Verbindung an den Begrenzungskanten der ersten Platte bzw. der Diffusorstruktur vorgesehen ist, kann eine Verbindung an diesen Anlageflächen entfallen.

Das erfindungsgemäße optische System ist insbesondere zur Gestaltung eines Lichtverteilungssystems für ein Display bzw. eine Leuchte geeignet, bei welchem die Lichteintrittsfläche der ersten Platte unstrukturiert ist, und die Lichtaustrittsfläche der Platte eine optisch wirksame Mikrostrukturierung zur definierten Lichtablenkung des aus der ersten Platte austretenden Lichtes aufweist. Dabei kann die in Lichtrichtung vor der ersten Platte angeordnete Diffusorstruktur zur Streuung des von einem Leuchtmittel, wie einer Mehrzahl von Punktlichtquellen abgegebenen Lichtes, ausgebildet sein.

Das erfindungsgemäße optische System ist nicht auf die in Lichtrichtung Hintereinander-Anordnung von zwei optisch wirksamen, flächigen Strukturen beschränkt. Stattdessen kann vorgesehen sein, die Abfolge von weiteren optisch wirksamen flächigen Strukturen durch die Anordnung von weiteren Folien, Filmen und/oder Platten zu erweitern, welche jeweils zu der gewünschten spezifischen Gesamtlichtverteilung nach Durchlaufen des optischen Systems beitragen, wobei hintereinander angeordnete flächige Strukturen miteinander verbunden sein können, so dass sie als einzelnes optisches System einfach handhabbar, insbesondere in ein Display bzw. eine Leuchte einsetzbar sind.

Zweckmäßigerweise kann die Verbindung der optisch wirksamen flächigen Strukturen miteinander zu einem einzelnen und einfach zu handhabbaren Bauelement als unlösbare Verbindung ausgebildet sein, d.h. die Verbindung lässt sich nicht zerstörungsfrei in Bezug auf eine oder mehrere der flächigen Strukturen des optischen Systems lösen.

Vorteilhafterweise kann auch vorgesehen sein, dass an der von der ersten Platte wegweisenden Hauptfläche der Diffusorstruktur eine zweite optische wirksame Platte angeordnet ist, wobei die erste und zweite Platte sowie die zwischen diesen angeordnete Diffusorstruktur im Bereich von Befestigungsabschnitten, insbesondere im Bereich ihrer Begrenzungskanten, mechanisch miteinander verbunden sind, wobei zwischen der Diffusorstruktur und der ersten Platte sowie zwischen der Diffusorstruktur und der zweiten Platte eine Beabstandung über den größten Bereich ihrer jeweiligen Flächenerstreckung vorgesehen ist.

Dabei kann vorgesehen sein, die mechanische Verbindung zwischen der ersten Platte, der Diffusorstruktur und der zweiten Platte durch Laser- oder Ultraschall-Zuschneiden einer Stapelanordnung aus Halbzeugen, wie einer ersten Grundplatte, einer Diffusorgrundstruktur sowie einer zweiten Grundplatte herzustellen.

Es sei darauf hingewiesen, dass bei der Hintereinander-Anordnung von mehr als zwei flächigen optisch wirksamen Strukturen zwischen benachbarten Strukturen auch großflächige Verbindungen, insbesondere über deren gesamter flächigen Erstreckung, beispielsweise durch Verkleben mit einem transparenten Kleber, möglich sind. Dabei kann vorgesehen sein, die Verbindung der beiden flächigen Strukturen über den transparenten Kleber mit vorgegebenem Brechungsindex und diese flächigen Strukturen so aufeinander abgestimmt sind, dass die gewünschte optische Eigenschaft im Zusammenwirken beider flächiger Strukturen einschließlich der Klebeschicht erreicht wird.

Zur Einstellung der gewünschten optischen Eigenschaft der Diffusorstruktur sind unterschiedliche Gestaltungen denkbar. Beispielsweise kann vorgesehen sein, innerhalb der flächigen Diffusorstruktur, d.h. im Volumen eingebettete, optisch wirksame Streuteilchen vorzusehen. Darüber hinaus oder alternativ kann es jedoch auch zweckmäßig sein, eine oder beide Hauptflächen der flächigen Diffusorstruktur als optisch wirksame Streufläche auszubilden.

Die Erfindung wird im Folgenden durch das Beschreiben einiger Ausführungsformen unter Bezugnahme auf die beiliegenden Figuren erläutert, wobei
- Figur 1a: ein erfindungsgemäß ausgebildetes optisches System zusammen mit einstrahlenden LEDs in einer perspektivischen Ansicht,
- Figur 1b: eine Detailansicht des in Figur 1a gekennzeichneten Abschnittes P,
- Figur 2a: eine erste Platte eines anderen erfindungsgemäß ausgebildeten optischen Systems in einer perspektivischen Ansicht,
- Figur 2b: die in Figur 2a gezeigte Platte in einer Seitenansicht,
- Figur 3a: eine weitere Ausgestaltung einer ersten Platte für ein erfindungsgemäß ausgebildetes optisches System in einer perspektivischen Ansicht,
- Figur 3b: eine Detailansicht des in Figur 3a gekennzeichneten Bereichs V, und
- Figur 4: eine weitere Ausführungsform eines optischen Systems umfassend eine erste und eine zweite Platte sowie eine Diffusorstruktur in einer Seitendarstellung im Ausschnitt
zeigt.

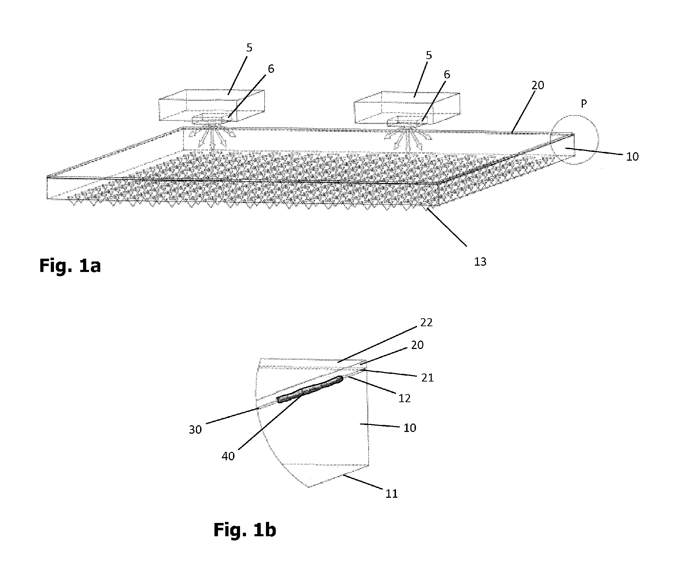

Figur 1a zeigt ein erfindungsgemäßes optisches System 1 zusammen mit einer Mehrzahl von Leuchtmitteln, wobei das System 1 ausgebildet ist, um das von den Leuchtmitteln emittierte Licht in Licht mit einer vorgegebenen Lichtverteilung zu überführen. Hierzu weist das optische System 1 eine Übereinander-Anordnung einer Diffusorfolie 20 sowie einer ersten Platte 10 auf. Eine Detailansicht des in Figur 1a mit P gekennzeichneten Bereichs ist in Figur 1b angegeben. Die beiden Bestandteile des optischen Systems 1, d. h. die erste Platte 10 und die Diffusorfolie 20 sind in der beschriebenen Ausführungsform durch eine Materialaufschmelzung 40 an ihren seitlichen Kanten mechanisch verbunden, wobei die Hauptfläche 12 der ersten Platte 10 der Hauptfläche 21 der Diffusorfolie 20 gegenüberliegt. Die mittels eines Stoffschlusses mechanisch miteinander verbundenen flächenartigen Strukturen weisen in der beschriebenen Ausführungsform eine durchgehende Beabstandung von einigen µm, beispielsweise 5 µm auf. Diffusorfolie 20 und erste Platte 10 sind an allen Begrenzungskanten über Materialaufschmelzungen 40 miteinander verbunden, die in Fig. 1a nicht und in Fig. 1b nur ausschnittsweise dargestellt sind.

Die Diffusorfolie 20 ist zum Streuen des von den Leuchtmitteln einfallenden Lichtes ausgebildet. Hierzu weist diese an ihren beiden Oberflächen 21, 22 Mikrostrukturen in Form von Kratzern im Mikrometerbereich auf. Das von der Diffusorfolie gestreute Licht transmittiert durch den Luftspalt 30 über die Hauptfläche 12 der ersten Platte in diese ein und wird an deren Lichtaustrittsfläche 11 in definierter Art und Weise zur Gestaltung einer vorgegebenen Lichtverteilung gebrochen. Hierzu sind an der Hauptfläche 12 Mikrostrukturen in Form von Brechungskegeln 13 vorgesehen, welche schachbrettartig an der als Lichtaustrittsfläche 11 arbeitenden Hauptfläche angeordnet sind. Zur Einfachheit der Darstellung sind die an der Lichtaustrittsfläche 11 angeformten Brechungskegeln 13 in Fig. 1b nicht dargestellt.

In der Darstellung gemäß Figur 1a ist das Leuchtmittel durch eine Mehrzahl von LEDs 6 bereitgestellt, welche jeweils auf einer zugeordneten Platine 5 angeordnet sind und im Wesentlichen als Punktlichtstrahler wirken, deren emittiertes Licht durch die Diffusorfolie 20 in einen großen Winkelbereich gestreut wird.

Das von den LEDs 6 emittierte Licht wird wie beschrieben bei der sukzessiven Transmission durch die Diffusorfolie 20 und die erste Platte 10 in seinen Eigenschaften verändert zur Herstellung der gewünschten Lichtverteilung, beispielsweise, einer vorgegebenen Blendungsbegrenzung. Dabei sind die optischen Eigenschaften der Diffusorfolie 20 und der ersten Platte 10 aufeinander abgestimmt.

In der beschriebenen Ausführungsform sind sowohl die erste Platte 10 als auch die Diffusorfolie 20 aus PMMA hergestellt. Die Dicke der Diffusorfolie 20 beträgt 100 µm, die Dicke der ersten Platte beträgt 10 mm.

Das in Figur 1a angegebene optische System 1 kann beispielsweise dadurch hergestellt werden, dass eine Diffusorgrundfolie und eine Grundplatte übereinander angeordnet werden und mittels Laserschneiden beide Teile gleichzeitig zugeschnitten werden mit der Wirkung, dass diese während des Zuschneidens an ihren Randbegrenzungen über Materialaufschmelzungen 40 stoffschlüssig und/oder formschlüssig miteinander unlösbar verbunden werden.

Die Beabstandung von Diffusorfolie 20 und erster Platte 10 kann während dieses Herstellungsprozesses beispielsweise dadurch erreicht werden, dass permanent während des Zuschneidevorganges ein Gas zwischen Diffusorfolie 20 und erster Platte 10 eingeströmt wird. In einer anderen Ausführungsform kann auch vorgesehen sein, die Diffusorstruktur 20 dicker mit einer sehr geringen Krümmung auszubilden, um die beschriebene Beabstandung zwischen Diffusorstruktur 20 und erster Platte 10, idealerweise über die gesamte Flächenerstreckung der beiden Bauteile zu erreichen.

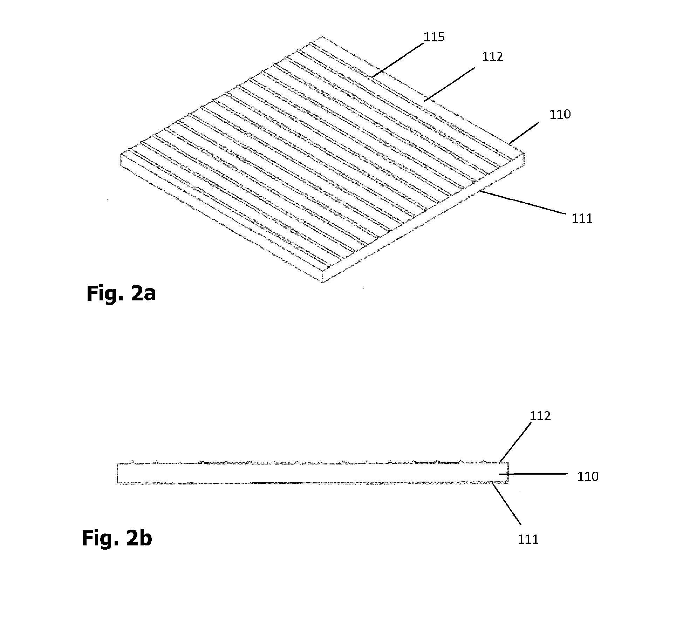

Figuren 2a und 2b zeigen den Aufbau einer ersten Platte 110 in einer weiteren Ausführungsform eines erfindungsgemäßen optischen Systems, bei welchem an der Hauptfläche 112 beabstandete und parallel zu einer Kante der Platte angeordnete zylinderförmige Stege 115 integral angeformt sind zur Bereitstellung von Abstandshaltern zu der nicht dargestellten Diffusorfolie. Das Vorsehen derartiger Abstandshalter stellt sicher, dass über den größten Teil der flächigen Erstreckung der benachbarten Bauteile Diffusorfolie 20 und erste Platte 10 ein Luftspalt vorliegt, so dass die jeweiligen optischen Eigenschaften der Diffusorstruktur 20 bzw. der ersten Platte 10 sich nicht gegenseitig stören. In der in den Figuren 2a,b gezeigten Ausführungsform einer ersten Platte ist die Hauptfläche 111 unstrukturiert als ebene Fläche ausgebildet.

In der Regel sind Abstandshalter integral an der Platte 10 angeordnet, in einer anderen, nicht gezeigten Ausführungsform können Abstandshalter jedoch auch an der Diffusorstruktur vorgesehen sein. Auch bei einem derartigen optischen System kann die mechanische Verbindung von Diffusorstruktur 20 und erster Platte 10 mittels Zuschneiden und gleichzeitigem Verbinden an den Schneidkanten erzeugt werden.

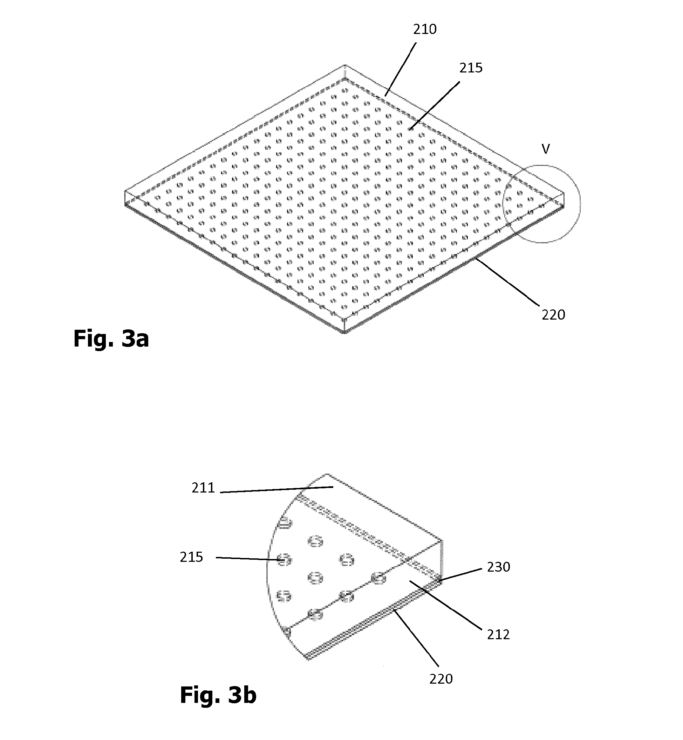

Eine weitere Ausführungsform eines erfindungsgemäß gestalteten optischen Systems 1 zeigen die Figuren 3a und 3b. Dabei weist die erste Platte 210 an der Hauptfläche 212, welche der Diffusorfolie 220 zugewandt ist, noppenartige Strukturen in Form von zylinderförmigen Vorsprüngen 215 auf, welche für die beschriebene Beabstandung zwischen der Diffusorstruktur 220 und der ersten Platte 210 sorgen. Figur 3b zeigt den mit V markierten Abschnitt der Figur 3a in einer Detailansicht. Der Spalt 230 wird durch die Höhe der zylinderförmigen Vorsprünge 215 festgelegt. Der Einfachheit halber ist die mit Bezug auf die obenstehend beschriebenen Ausführungsformen hier auch vorliegende Materialaufschmelzung an den Rändern der ersten Platte 210 und der Diffusorfolie 220, verursacht durch das obenstehend beschriebene gleichzeitige Zuschneiden der Teile, nicht dargestellt.

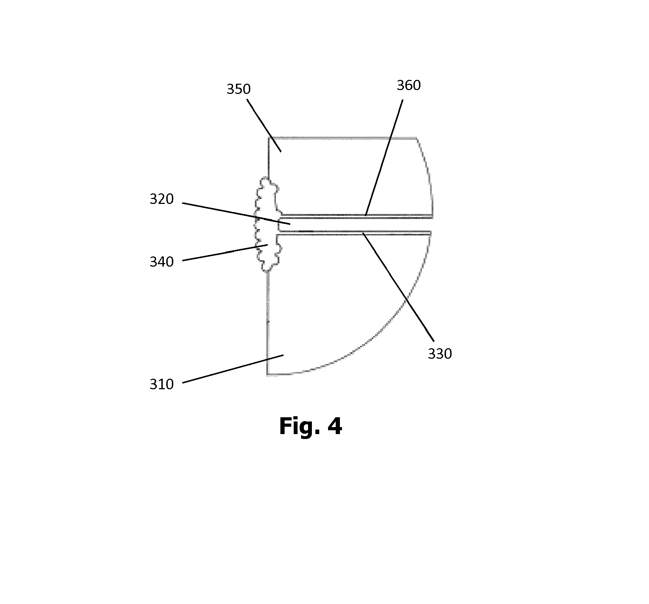

Das erfindungsgemäße optische System 1 ist nicht auf die Verbindung von nur zwei flächigen, optisch wirksamen Strukturen beschränkt. Figur 4 zeigt hierzu in einer seitlichen Ausschnittdarstellung eine Ausführungsform bei welcher eine Diffusorstruktur in Form einer Diffusorfolie 320 zwischen einer ersten Platte 310 und einer zweiten optisch wirksamen Platte 350 sandwichartig angeordnet ist, wobei in der beschriebenen Ausführungsform die Diffusorfolie 320 zur ersten Platte 310 einen Spalt 330 und zur zweiten optisch wirksamen Platte 350 einen weiteren Spalt 360 aufweist. Auch bei dieser Ausführungsform wird die Sandwichstruktur durch Zuschneiden und Aufschmelzen der einzelnen Teile an ihren Randbereichen miteinander verbunden, diese Materialaufschmelzung 340 stellt eine stoffliche Verbindung zwischen den drei Bauelementen an ihren Begrenzungskanten dar.

In einer nicht dargestellten Ausführungsform, insbesondere in solchen Fällen, bei welchen die einzelnen flächigen Bauteile nicht aus dem gleichen optischen Material hergestellt sind, oder durch Einstellen spezifischer Verfahrensparameter beim Zuschneiden, kann eine mechanische Verbindung an dem Begrenzungskanten zwischen den einzelnen Bauteilen erzeugt werden, welche nicht auf einem Stoffschluss beruht, sondern auf einem Formschluss durch Verhaken und Verkrallen von aufgeschmolzenen Teilbereichen der einzelnen flächigen Bauteile des erfindungsgemäßen optischen Systems 1.

### Bezugszeichenliste

- 1: Optisches System
- 5: Platine
- 6: LEDs
- 10: Erste Platte
- 11, 12: Hauptfläche
- 13: Brechungskegel
- 20: Diffusorfolie
- 21, 22: Hauptfläche
- 30: Spalt
- 40: Materialaufschmelzung
- 110: Erster Platte
- 111, 112: Hauptfläche
- 115: Steg
- 210: Erste Platte
- 211, 212: Hauptfläche
- 215: Zylinderförmiger Vorsprung
- 220: Diffusorfolie
- 230: Spalt
- 240: Materialaufschmelzung
- 310: Erste Platte
- 320: Diffusorfolie
- 330: Spalt
- 340: Materialaufschmelzung
- 350: Zweite Platte
- 360: Spalt

## Patentansprüche

1. Optisches System (1) zur Erzeugung einer spezifischen Lichtverteilung, insbesondere einer asymmetrischen Lichtverteilung zur Blendungsbegrenzung, umfassend eine optisch wirksame erste Platte (10, 210, 310), deren eine Hauptfläche (11, 12, 211, 212) als Lichteintrittsfläche und deren andere Hauptfläche (11, 12, 211, 212) als Lichtaustrittsfläche ausgebildet ist, wobei sich in Lichtrichtung vor der Lichteintrittsfläche der ersten Platte (10, 210, 310) eine flächige Diffusorstruktur (20, 220, 320) in Form einer Tafel oder einer Folie erstreckt, **dadurch gekennzeichnet, dass** die flächige Diffusorstruktur (20, 220, 320) im Bereich von vorgegebenen Befestigungsabschnitten mechanisch mit der ersten Platte (10, 210, 310) verbunden und über den größten Teil ihrer Flächenerstreckung zur ersten Platte (10, 210, 310) beabstandet angeordnet ist.

2. Optisches System (1) nach Anspruch 1, **dadurch gekennzeichnet, dass** die zwischen der Diffusorstruktur (20, 220, 320) und der ersten Platte (10, 210, 310) ein Fluidspalt, insbesondere ein Luftspalt angeordnet ist.

3. Optisches System (1) nach Anspruch 1 oder 2, **dadurch gekennzeichnet, dass** die Diffusorstruktur (20, 220, 320) mit Ausnahme im Bereich ihrer Befestigungsabschnitte, insbesondere mit Ausnahme im Bereich ihrer Begrenzungskanten, zur ersten Platte (10, 210, 310) beabstandet angeordnet ist.

4. Optisches System (1) nach Anspruch 1, 2 oder 3, **dadurch gekennzeichnet, dass** der Abstand zwischen Diffusorstruktur (20, 220, 320) und ersten Platte (10, 210, 310) kleiner 25µm, insbesondere kleiner 5µm beträgt.

5. Optisches System (1) nach einem der Ansprüche 1 bis 4, **dadurch gekennzeichnet, dass** ein gasförmiges Fluid staub-, feuchtigkeits- und/oder gasdicht zwischen der ersten Platte (10, 210, 310) und der Diffusorstruktur (20, 220, 320) eingeschlossen ist.

6. Optisches System (1) nach einem der Ansprüche 1 bis 5, **dadurch gekennzeichnet, dass** die flächige Diffusorstruktur (20, 220, 320) eine Dicke kleiner 250µm, insbesondere kleiner 75µm aufweist.

7. Optisches System (1) nach einem der Ansprüche 1 bis 6, **dadurch gekennzeichnet, dass** die mechanische Verbindung zwischen erster Platte (10, 210, 310) und Diffusorstruktur (20, 220, 320) durch Gestaltung einer Mehrzahl von Formschlüssen realisiert ist, insbesondere durch Verhaken oder Verkrallen.

8. Optisches System (1) nach einem der Ansprüche 1 bis 7, **dadurch gekennzeichnet, dass** die mechanische Verbindung zwischen erster Platte (10, 210, 310) und Diffusorstruktur (20, 220, 320) durch Laser- oder Ultraschall-Zuschneiden einer Stapelanordnung einer ersten Grundplatte und einer Diffusorgrundstruktur wie einer Diffusorgrundfolie hergestellt ist.

9. Optisches System (1) nach einem der Ansprüche 1 bis 8, **dadurch gekennzeichnet, dass** zur Vermeidung einer vollflächigen Anlage von erster Platte (10, 210, 310) und Diffusorstruktur (20, 220, 320) Abstandshalter vorgesehen sind.

10. Optisches System (1) nach Anspruch 9, **dadurch gekennzeichnet, dass** die Abstandshalter integral an einer Oberfläche der ersten Platte (10, 210, 310) und/oder der Diffusorstruktur (20, 220, 320) angeformt sind.

11. Optisches System (1) nach Anspruch 9 oder 10, **dadurch gekennzeichnet, dass** die erste Platte (10, 210, 310) und die Diffusorstruktur (20, 220, 320) im Bereich von jeweiligen Anlageflächen der Abstandshalter miteinander verbunden sind.

12. Optisches System (1) nach einem der Ansprüche 1 bis 11, **dadurch gekennzeichnet, dass** die Lichteintrittsfläche der ersten Platte (10, 210, 310) unstrukturiert ist und/oder die Lichtaustrittsfläche der ersten Platte (10, 210, 310) eine optisch wirksame Mikrostrukturierung zur Lichtlenkung des aus der ersten Platte (10, 210, 310) austretenden Lichtes aufweist.

13. Optisches System (1) nach einem der Ansprüche 1 bis 12, **dadurch gekennzeichnet, dass** an der von der ersten Platte (10, 210, 310) wegweisenden Hauptfläche (11, 12, 211, 212) der Diffusorstruktur (20, 220, 320) eine zweite optisch wirksame Platte (350) angeordnet ist, wobei die erste und zweite Platte (10, 210, 310, 350) sowie die zwischen diesen angeordnete Diffusorstruktur (20, 220, 320) im Bereich von Befestigungsabschnitten, insbesondere im Bereich ihrer Begrenzungskanten, mechanisch miteinander verbunden sind, wobei zwischen der Diffusorstruktur (20, 220, 320) und der ersten Platte (10, 210, 310) sowie zwischen der Diffusorstruktur (20, 220, 320) und der zweiten Platte (350) eine Beabstandung vorgesehen ist.

14. Optisches System (1) nach Anspruch 13, **dadurch gekennzeichnet, dass** die mechanische Verbindung zwischen der ersten Platte (10, 210, 310), der Diffusorstruktur (20, 220, 320) und zweiten Platte (350) durch Laser- oder Ultraschall-Zuschneiden einer Stapelanordnung einer ersten Grundplatte, einer Diffusorgrundstruktur sowie einer zweiten Grundplatte hergestellt ist.

15. Optisches System (1) nach einem der Ansprüche 1 bis 14, **dadurch gekennzeichnet, dass** die flächige Diffusorstruktur (20, 220, 320) im Volumen eingebettete, optisch wirksame Streuteilchen aufweist.

16. Optisches System (1) nach einem der Ansprüche 1 bis 15, **dadurch gekennzeichnet, dass** zumindest eine der Hauptflächen (11, 12, 211, 212) der flächigen Diffusorstruktur (20, 220, 320) als optisch wirksame Streufläche ausgebildet ist.
